Europäisches Patentamt

European Patent Office

Office européen des brevets

(19)

(11) EP 0 706 104 B1

(12) EUROPÄISCHE PATENTSCHRIFT

(45) Veröffentlichungstag und Bekanntmachung des
Hinweises auf die Patenterteilung:
09.09.1998  Patentblatt 1998/37

(51) Int Cl.⁶: **G05B 19/4103**

(21) Anmeldenummer: 94115386.8

(22) Anmeldetag: 29.09.1994

(54) **Überschleifen mit maximaler Achsbeschleunigung**

Grinding with maximal axial acceleration

Meulage avec une accélération maximale d'axe

(84) Benannte Vertragsstaaten:
AT CH DE ES FR GB IT LI SE

(43) Veröffentlichungstag der Anmeldung:
10.04.1996  Patentblatt 1996/15

(73) Patentinhaber: SIEMENS
AKTIENGESELLSCHAFT
80333 München (DE)

(72) Erfinder: Westermeyer, Wilhelm Dr.
D-90425 Nürnberg (DE)

(56) Entgegenhaltungen:
EP-A- 0 439 617          EP-A- 0 476 381

**Beschreibung**

Die Erfindung bezieht sich auf ein Verfahren zum Verschleifen nicht-tangentialer Bereiche in programmierten Konturen, insbesondere zum Einsatz in numerisch gesteuerten Werkzeugmaschinensteuerungen.

Programmierte Konturen zur Verwendung beispielsweise in numerischen Steuerungen für Werkzeugmaschinen oder Robotern weisen häufig an Satzübergängen eine Ecke auf. Dies ist z.B. dann der Fall, wenn zwei nicht kollineare Linearsätze aufeinander folgen. Wird in einem solchen Fall die Werkzeugorientierung mitinterpoliert, so ist deren Verlauf in Maschinenachskoordinaten ebenfalls häufig nicht-tangential ineinander übergehend programmiert. Fährt die Steuerung solche programmierten Verläufe ohne eine starke Geschwindigkeitsabsenkung direkt an, so resultieren in Folge von Achsgeschwindigkeitssprünge, die beim Abfahren eines Knickes auf der zu beschreibenden Kontur auftreten, Beschleunigungsimpulse, die Getriebe und Maschine stark belasten. So erzeugte die Beschleunigungsstöße an der Maschine können beispielsweise zur Folge haben, daß sogenannte Loseeffekte, die sich z.B. in einem an die Maschine angeschlossenen Getriebe im Laufe der Betriebszeit in Form eines Spieles zwischen den Zahnrädern eingestellt haben, weiter verstärkt werden. Auch können die beschriebenen Beschleunigungsimpulse erhebliche Schwingungen an der Maschine hervorrufen, welche unerwünscht sind, da sie zu einer Verschlechterung der Maßhaltigkeit bei der Fertigung führen können. Aus diesem Grunde ist man bestrebt, Geschwindigkeitsführungen bei modernden Antrieben derart zu gestalten, daß an Satzübergängen, welche nicht-tangentiale Übergänge aufweisen, Achsgeschwindigkeitssprünge und dadurch bedingte Beschleunigungsimpulse möglichst begrenzt werden.

Es ist bekannt, daß herkömmliche Verfahren zur Geschwindigkeitsführung in der Werkzeugmaschinensteuerung zur Erfüllung dieses Erfordernisses ein Verschleifen eventuell vorhandener Knicke in der Kontur durch eine hohe axiale Glättung im Lageregler erreichen (so z.B. realisiert in Siemens SINUMERIK 840C; vgl. dazu EP-O 477 412 A1 und US-A-4 603 286). Eine solche Vorgehensweise beinhaltet jedoch den Nachteil, daß auch an den Stellen, die problemlos exakt gefertigt werden könnten, axiale Schleppfehler und dadurch bedingte Konturfehler in Kauf genommen werden müssen. Ein weiteres bekanntes Verfahren führt ein Verschleifen über den Schleppfehler gezielt lokal durch, indem ein Übergangselement analog einem Verrundungsradius eingefügt wird. Da ein solches Übergangselement jedoch in der Regel prophylaktisch eingesetzt wird, wird die dabei tatsächlich auftretende Maschinenbelastung nur grob oder gar nicht berücksichtigt. Dies kann jedoch zu einer Belastung der Antriebe führen, was vor allem bei einem scharf eingestellten Regler unerwünscht ist.

Aus der EP-A-0 476 381 ist ein Verfahren zur Bahninterpolation für Roboter bekannt, bei dem nicht-tangentiale Satzübergänge anhand von im vorhinein ermittelten Bahnpunkten mit Hilfe eines Polygonzuges weichgeführt werden. Jedoch sind keine Maßnahmen zur Optimierung der Konturtreue sowie eine Minimierung eines zu bestimmenden tangentialen Überschleifbereiches gezeigt.

Aus der EP-A-0 439 617 ist ein Verfahren zur Optimierung beliebiger tangentialer Beschleunigungen bei numerischen Steuerungen zur Erreichung möglichst kurzer Berarbeitungszeiten bekannt. Diese betrifft jedoch nur die Optimierung beliebiger tangentialer Beschleunigungen allgemein und ist nicht auf den speziellen Anwendungfall des Verschleifens nicht-tangentialer Satzübergänge gerichtet. Es werden lediglich Beschleunigungswerte variiert, wodurch jedoch nicht erreicht werden kann, daß ein möglichst kurzer tangentialer Überschleifbereich zur Überwindung nicht-tangentialer Satzübergänge übermittelt wird.

Der Erfindung liegt daher die Aufgabe zugrunde, ein Verfahren zum Verschleifen unstetiger Bereich in programmierten Konturen so auszugestalten, daß dadurch bedingte in den Maschinenachsen auftretende Achsgeschwindigkeitssprünge und die dem zugrunde liegenden Beschleunigungsimpulse eingeschränkt werden können, sowie Getriebe und Maschine weniger stark belastet werden. Gleichzeitig soll jedoch die tatsächliche Maschinenbelastung, welche beim Verschleifen solcher unstetiger Bereiche auftritt, berücksichtigt werden, so daß der Verschleifvorgang mit jeweils maximal möglicher Achsbeschleunigung durchgeführt werden kann, es jedoch nicht zu einer Überlastung des elektrischen Antriebes kommt.

Gemäß der Erfindung wird diese Aufgabe durch folgende Merkmale gelöst:

1.1 für nicht-tangentiale Satzübergänge wird jeweils an dessen Stelle ein Überschleifelement eingefügt,

1.2 in einem solchen Überschleifelement werden die Achsverläufe im Basiskoordinatensystem mit Hilfe eines Polynoms, insbesondere quadratischer, kubischer oder quintischer Ordnung, in einem Standardverschleifbereich weich geführt,

1.3 der Verlauf der Maschinenachsen innerhalb des Überschleifelementes wird vor der Interpolation approximativ bestimmt,

1.4 anhand der globalen Maschinenachsgeschwindigkeitsgrenzen und Maschinenachsbeschleunigungsgrenzen wird die maximal mögliche Bahngeschwindigkeitsgrenze und Bahnbeschleunigungsgrenze abgeleitet,

1.5 damit das Überschleifen über die Kontur mit maximaler Achsbeschleunigung erfolgt, wird die Weite des Verschleifbereiches für ein optimiertes Überschleifelement iterativ so weit reduziert, wie es die bestimmte maximale Bahngeschwindigkeitsgrenze und Bahnbeschleunigungsgrenze zulassen,

1.6 ist eine Reduzierung des Standardverschleifbereiches nicht möglich, da bereits die Bahngeschwindigkeitsgrenze und/oder die Bahnbeschleunigungsgrenze überschritten wird, so wird zum Ausgleich eine ausreichende Geschwindigkeitsabsenkung vorgenommen.

Eine erste vorteilhafte Ausgestaltung, welche eine Approximation der Maschinenachsverläufe besonders effektiv realisiert, zeichnet sich durch folgende Merkmale aus:

2.1 für die Approximation der tatsächlich auftretenden Geschwindigkeitsverläufe der Maschinenachsen im Überschleifbereich wird die zu beschreibende Kontur anhand der Steuerungsdaten abgetastet und die Abtastpunkte werden über Polynome beliebiger Ordnung, insbesondere jedoch kubische Polynome, zu einem approximierten Profilspektrum verbunden,

2.2 aus den Polynomen werden in Abhängigkeit von den sich daraus ergebenden Kennwerten die auftretende Achsgeschwindigkeitsbelastung und Achsbeschleunigungsbelastung zur Bestimmung von Bahngeschwindigkeitsgrenze und Bahnbeschleunigungsgrenze abgeleitet.

Eine weitere vorteilhafte Ausgestaltung, welche die vorliegende Erfindung besonders sicher und flexibel realisiert, zeichnet sich durch folgende Merkmale aus:

3.1 die Maschinenachswerte werden lediglich gemäß einer Grobinterpolation ermittelt, so daß das Verfahren unabhängig von der jeweiligen Maschinenkinematik ist,

3.2 legen die Maschinenachsen weite Wege im Verschleifbereich zurück, so wird der Verschleifbereich zusätzlich reduziert und durch eine ausreichende Geschwindigkeitsabsenkung eine Überlastung der Antriebe vermieden.

Die mit der Erfindung erzielten Vorteile bestehen insbesondere darin, daß die Belastung von Getriebe und Maschine infolge von Achsgeschwindigkeitssprüngen und Beschleunigungsimpulsen soweit verringert werden kann, daß eine starke Geschwindigkeitsabsenkung aufgrund der Verwendung eines Überschleifelementes vermieden wird. Der Überschleifvorgang erfolgt mit maximaler Achsbeschleunigung, was den Vorteil mit sich bringt, daß die Leistungsfähigkeit der Maschine zu jeder Zeit, also auch bei nicht-tangentialen Satzübergängen, ausgenutzt wird. Auf eine globale Herabsetzung der Achsbeschleunigung sowie eine Geschwindigkeitsabsenkung kann verzichtet und die dadurch bedingten axialen Schleppfehler und Konturfehler können vermieden werden. Hinzu kommt, daß sich die aufgeführten Vorteile mit vorliegender Erfindung effektiv und besonders kostengünstig realisieren lassen.

Ein Ausführungsbeispiel der Erfindung ist in den Zeichnungen dargestellt und wird im folgenden näher erläutert. Dabei zeigen:

FIG 1 Kontur mit nicht-tangentialem Satzübergang und Überschleifelementen im zulässigen Verschleifbereich in einem Koordinatensystem in X- und Y-Richtung,

FIG 2 Geschwindigkeitsverlauf in Basiskoordinaten zur Beschreibung der Kontur aus FIG 1 unter Berücksichtigung unterschiedlicher Überschleifelemente,

FIG 3 Geschwindigkeitsverlauf in Maschinenachsenkoordinaten zur Beschreibung der Kontur aus FIG 1 unter Berücksichtigung mehrerer Überschleifelemente,

FIG 4 Beschleunigungsverlauf zur Beschreibung des Geschwindigkeitsverlaufs in Maschinenachsenkoordinaten aus FIG 3 mit Berücksichtigung unterschiedlicher Überschleifelemente.

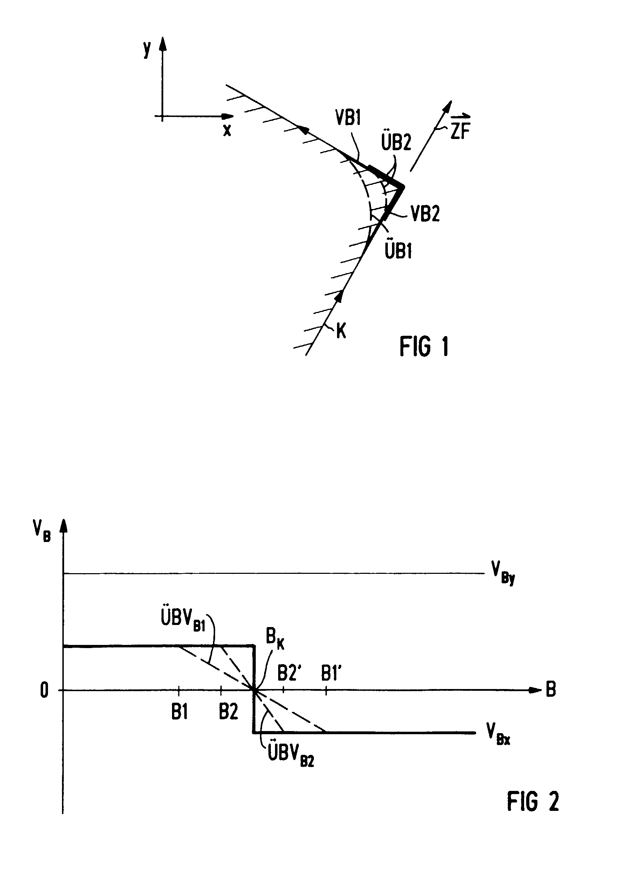

In der Darstellung gemäß FIG 1 ist eine Prinzipskizze gezeigt, in welcher der Verlauf einer programmierten Kontur K mit einem nicht-tangentialen Satzübergang in Form einer zu fertigenden rechtwinkligen Ecke dargestellt ist. Die Kontur K ist in zwei Dimensionen, skizziert in Form eines X-, Y-Koordinatensystems, zu verfahren. Die Fertigungsrichtung entlang der Kontur K wird durch zwei Pfeile verdeutlicht. Im Bereich der rechtwinkligen Kante werden zwei unterschiedliche Überschleifelemente ÜB1 und ÜB2 in Form von gestrichelten Linien dargestellt, die in zwei unterschiedlich weiten Verschleifbereichen VB1 und VB2 verlaufen. Der zu Beginn angesetzte Standardverschleifbereich VB1 ist größer als VB2. Ein Pfeil ZF beschreibt die Zentrifugalkraft welche beim Verfahren des Knickpunktes auftritt.

In der Darstellung gemäß FIG 2 ist ein Diagramm gezeigt, in welchem der Verlauf der Geschwindigkeit $V_B$ in Basiskoordinaten sowohl in X-Richtung $V_{Bx}$ und in Y-Richtung $V_{By}$ über der Bahnlänge B aufgetragen ist. Die Geschwindigkeit in Y-Richtung verläuft konstant. Mit dem Auftreten des zu verfahrenden Knickes zum Bahnpunkt $B_K$ ändert die Geschwindigkeit in X-Richtung ihr Vorzeichen. Der Idealverlauf ist in Form einer durchgezogenen Linie dargestellt. Der Geschwindigkeitsverlauf in X-Richtung, welcher sich im Verschleifbereich bei Einsatz der beiden Überschleifelemente aus FIG 1 ergibt, ist in Form von gestrichelten Linien $ÜBV_{B1}$ und $ÜBV_{B2}$ dargestellt. Beide verlaufen mit unterschiedlich starker negativer Steigung und schneiden die Bahnachse im Punkt $B_K$. $ÜBV_{B1}$ verläuft flacher, beginnt bei B1 und endet bei B1', während $ÜBV_{B2}$ zu einem späteren Zeitpunkt B2 beginnt und bereits bei B2' endet.

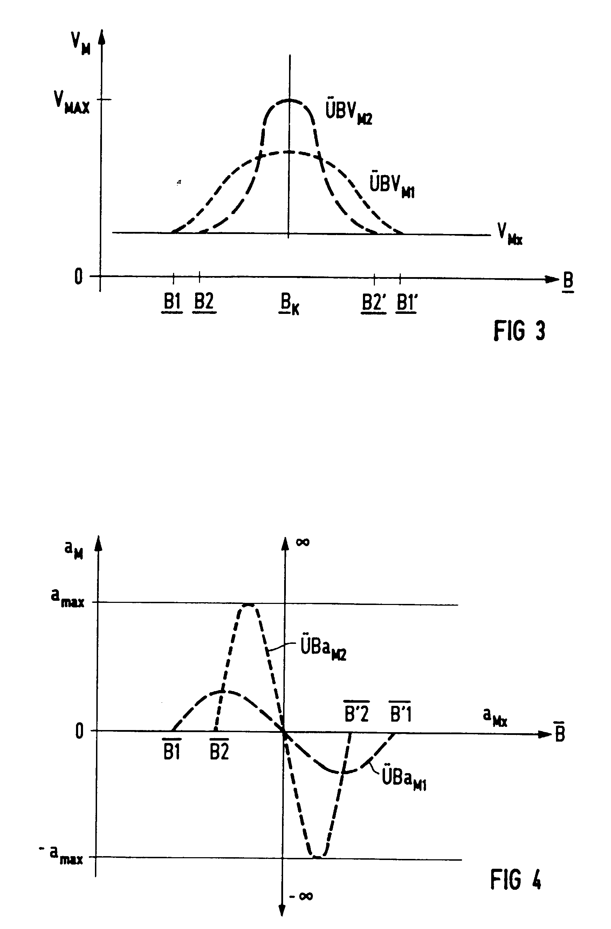

In der Darstellung gemäß FIG 3 ist ein Diagramm gezeigt, in dem der Verlauf der Geschwindigkeit $V_M$ in Maschinenachsenkoordinaten über der Bahn $\underline{B}$ aufgetragen ist. Dabei ist der Übersichtlichkeit halber nur der Geschwindigkeitsverlauf in X-Richtung $V_{Mx}$ gezeigt. Der Verlauf in Form einer durchgezogenen Linie mit einem Geschwindigkeitsimpuls zum Bahnpunkt des zu verfahrenden Knickes $\underline{B}_K$ beschreibt den theoretischen Verlauf der Geschwindigkeit in Maschinenachsenkoordinaten in X-Richtung, welche sich für den in FIG 2 dargestellten Idealverlauf der Geschwindigkeit $V_{Bx}$ ergibt. In Form von gestrichelten Linien ist der sich ergebende Geschwindigkeitsverlauf der Maschinenachsenkoordianten bei Berücksichtigung der bereits in FIG 2 bereitgestellten Überschleifelemente gezeigt. Der sich für ein Überschleifelement ÜB1 ergebende Geschwindigkeitsverlauf in Maschinenachskoordinaten $\ddot{U}BV_{M1}$ beschreibt eine recht flache und weitgezogene Glockenkurve, die von $\underline{B}1$ nach $\underline{B}1'$ verlauft und jeweils linear endet. Der entsprechende Geschwindigkeitsverlauf für das zweite Überschleifelement $\ddot{U}BV_{M2}$ beschreibt ebenfalls eine Glockenkurve, die schmaler von B2 bis B2' verläuft, dafür aber steiler ist, so daß ihr Maximum zum Bahnpunkt des auftretenden Knickpunktes $\underline{B}_K$ eine Geschwindigkeitsobergrenze $V_{max}$ erreicht.

In der Darstellung gemäß FIG 4 ist ein Diagramm gezeigt, welches den Beschleunigungsverlauf in Maschinenachsenkoordinaten $a_M$ zu den in FIG 3 skizzierten Geschwindigkeitsverläufen darstellt. Wiederum ist der Verlauf der Beschleunigung $a_{Mx}$, welcher dem in FIG 2 dargestellten Idealverlauf zugrunde liegt, in Form einer durchgezogenen Linie dargestellt. Für den angesprochenen Idealverlauf ergibt sich jedoch der Fall, daß zum Bahnpunkt des Auftretens des zu verfahrenden Knickes $\bar{B}_K$ erst ein unendlich hoher Beschleunigungsimpuls sowie sofort darauffolgend ein negativer unendlicher Beschleunigungsimpuls auftritt. Die beiden realistischen Verläufe, welche den bereits in den bisherigen Figuren zugrundegelegten beiden Überschleifelementen entsprechen, sind wiederum in Form von gestrichelten Linien dargestellt. Ein Beschleunigungsverlauf, welcher den Geschwindigkeitsverlauf $\ddot{U}BV_{M1}$ in Maschinenachsenkoordinaten nach FIG 3 erzeugt, zeigt der gestrichelte Verlauf $\ddot{U}Ba_{M1}$, welcher ausgehend bei $\bar{B}1$ zum Bahnpunkt des Auftretens des Knickes $\bar{B}_K$ die Bahnachse $\bar{B}$ schneidet und sein Vorzeichen ändert und bei $\bar{B}'1$ endet. Die Form des Verlaufes entspricht einer Sinuskurve, welche mit Linearabschnitten zwischen den Extrema geführt wird. Ebenso verhält es sich mit dem Beschleunigungsverlauf hinsichtlich des zweiten Überschleifelementes $\ddot{U}Ba_{M2}$, welcher jedoch zu einem späteren Bahnpunkt $\bar{B}2$ einsetzt und ein höheres Beschleunigungsmaximum aufweist, welches an die maximal zulässige Beschleunigung $a_{max}$ sowohl im positiven als auch negativen Bereich heranreicht und bereits bei $\bar{B}'2$ endet. Diese Kurve ist ebenfalls gestrichelt gezeichnet und beschreibt demnach den Beschleunigungsbereich in Maschinenachsenkoordinaten mit maximaler Achsbeschleunigung.

Zur Realisierung eines erfindungsgemäßen Überschleifens mit maximaler Achsbeschleunigung wird gemäß einem zulässigen Verschleifbereich VB1 ein Überschleifelement ÜB1 anstatt des nicht-tangentialen Satzüberganges, z.B. in Form einer rechtwinkligen Ecke, eingefügt. Darin werden die Achsverläufe im Basiskoordinatensystem $V_{By}$ und $V_{Bx}$ über ein kubisches Polynom oder ein Polynom höherer Ordnung möglichst weich geführt, um Zentrifugalbeschleunigungseffekte $\vec{ZF}$ zu minimieren. Im weiteren Verlauf soll der Einfachheit halber nur noch von kubischen Polynomen die Rede sein. Es sei an dieser Stelle jedoch darauf hingewiesen, daß auch andere geometrische Ansätze wie die Verwendung eines kreisförmigen oder eines ellipsoiden Kurvenverlaufes als Überschleifelement i9n Verbindung mit dem vorliegenden Verfahren eingetreten werden können. Ein polynomialer Verlauf jedoch besitzt den Vorteil, daß ein solcher auch über mehrere Knicke unterschiedlicher Orientierung geführt werden kann. Der leichteren Verständlichkeit und Übersichtlichkeit halber ist in den Figuren 1 bis 4 der Verlauf von Geschwindigkeiten in Basiskoordinaten, Maschinenachskoordinaten sowie der Beschleunigungsverlauf in Maschinenachskoordinaten anhand einer rechtwinkligen Ecke als nichttangentialem Satzübergang dargestellt. Für den Verlauf eines Überschleifelementes, welches durch ein kubisches Polynom approximiert wird, ergibt sich daher aufgrund der Annahme eines einfachen Falles mit einfachen nicht-tangentialen Satzübergängen lediglich ein Verrundungseffekt in Form eines Radius. Wollte man die vorgegebene programmierte Kontur K ohne Einsatz eines Überschleifelementes fertigen, so resultierte daraus ein Geschwindigkeitsverlauf in Basiskoordinaten $V_{Bx}$, welcher zum Bahnpunkt des Auftreten des Knickes $B_K$ einen Achsgeschwindigkeitssprung vom positiven in den negativen Geschwindigkeitsbereich aufweist. Ein solcher Achsgeschwindigkeitssprung belastet jedoch die Maschine und das Getriebe sehr stark und soll erfindungsgemäß durch den Einsatz eines Überschleifelementes vermieden werden. Ein erstes Überschleifelemente ÜB1, welches den gesamten zulässigen zu Beginn angesetzten Standardverschleifbereich VB1 ausnutzt, wirkt sich auf den Geschwindigkeitsverlauf $V_{Bx}$ in Basiskoordinaten derart aus, daß der Übergang vom positiven in den negativen Geschwindigkeitsbereich bereits zu einem früheren Bahnpunkt B1 beginnt und linear abnehmend durch den Punkt $B_K$ bis zum Erreichen einer konstanten negativen Bahngeschwindigkeit in X-Richtung zum Bahnpunkt B'1 verläuft. So dargestellt anhand des gestrichelten Verlaufes $\ddot{U}BV_{B1}$ in FIG 2.

Die dabei auftretende Achsbelastung wird anschließend näherungsweise bestimmt, indem die tatsächlich auftretenden Geschwindigkeitsverläufe der Maschinenachsen im Überschleifbereich anhand der Abtastpunkte der Steuerungsdaten über kubische Polynome oder solche höherer Ordnung zu einem approximierten Profilspektrum verbunden werden. Bei Betrachtung des so ermittelten Geschwindigkeitsverlaufes in Maschinenachsenkoordinaten $V_{Mx}$ in X-Richtung wird deutlich, daß ein extrem starker Achsgeschwindigkeitsimpuls, wie er zur Realisierung des Idealverlaufes der Geschwindigkeit $V_{Bx}$ nötig wäre, durch Einsatz eines Überschleifelementes ÜB1 vermieden werden kann. Dadurch wird erreicht, daß der Geschwindigkeitsverlauf $V_{Mx}$ wesentlich weicher geführt werden kann, da bereits zu einem Bahnpunkt $\underline{B}1$ eine allmähliche Geschwindigkeitszunahme erfolgt, die zum Bahnpunkt des Auftretens des Knickes $\underline{B}_K$ die maximale Geschwindigkeit erreicht und dann wieder bis zum Bahnpunkt $\underline{B}'1$ abfällt, mithin eine Glockenkurve beschreibt. Dabei werden Getriebe und Maschine erheblich weniger stark belastet.

Besonders deutlich wird dieser Vorteil anhand des Beschleunigungsverlaufes der Maschinenachskoordinaten $a_M$. Zur Realisierung des bereits dargestellten Idealverlaufes der Geschwindigkeit in Basiskoordinaten $V_{Bx}$ wäre eine Beschleunigung nötig, die aufgrund des mit Ausnahme des Bahnpunktes des Auftretens des Knickes $B_K$ konstant verlaufenden Geschwindigkeitsverlaufes zum Bahnpunkt $\overline{B}_K$ einen unendlich positiven und einen unendlichen negativen Beschleunigungssprung aufweisen müßte. Abgesehen von der Tatsache, daß ein solcher Verlauf nicht realisierbar ist, da die erreichbare maximale Beschleunigung nie unendlich werden kann, wird der Vorteil anhand des Beschleunigungsverlaufes bei Einsatz eines ersten Überschleifelementes ÜB1 deutlich. Um den glockenförmigen Verlauf der Geschwindigkeit in Maschinenachskoordinaten $V_{Mx}$ für ein erstes Überschleifelement, welches den gesamten zulässigen Standardverschleifbereich VB1 ausnutzt, zu erzeugen, verläuft die Beschleunigung im Bereich der konstanten Geschwindigkeit $V_{Mx}$ auf der Bahnachse mit dem Wert 0, steigt bei Erreichen des Bahnpunktes $\overline{T}1$ linear an und beschreibt nach der Form eines Sinusverlaufes ein lokales Maximum. Von dort fällt sie ebenfalls linear bis zum Erreichen des Bahnpunktes des Auftretens des Knickes $\overline{B}_K$ wieder auf den Wert 0 ab und läuft weiter in den negativen Bereich bis sie ebenfalls in die Form eines sinusförmigen Verlaufes zum Erreichen eines lokalen Minimums übergeht, um von dort linear wiederum bis zum Erreichen einer Beschleunigung mit dem Wert 0 zum Bahnpunkt $\overline{B}'2$ anzusteigen. Dieser Verlauf $\ddot{U}Ba_{M1}$ ist in Form einer gestrichelten Linie in FIG 4 dargestellt.

Da der Überschleifvorgang erfindungsgemäß jedoch mit einer maximalen Achsbeschleunigung ermöglicht werden soll, wird anhand der bekannten globalen Maschinenachsgeschwindigkeitsgrenze $V_{max}$ und Maschinenachsbeschleunigungsgrenzen $a_{max}$ bzw. $-a_{max}$ des verwendeten elektrischen Antriebes mit Hilfe der näherungsweise ermittelten Bahnkennwerte, z.B. der Steigung der Kurve in einem Punkt, die maximal mögliche Bahngeschwindigkeitsgrenze und Bahnbeschleunigungsgrenze für das zugrunde gelegte Überschleifelement ÜB1 abgeleitet. Bleiben bei Einfügen eines Überschleifelementes ÜB1, welches den gesamten zulässigen Standardverschleifbereich VB1 ausnutzt, sowohl der Geschwindigkeitsverlauf in Maschinenachsenkoordinaten $V_{Mx}$ unterhalb der globalen Maschinenachsengeschwindigkeitsgrenze $V_{max}$ als auch der Beschleunigungsverlauf in Maschinenachsenkoordinaten

$a_{Mx}$ innerhalb des zulässigen Bereiches zwischen positiver und negativer globalen Maschinenachsenbeschleunigungsgrenze $a_{max}$ bzw. $-a_{max}$, so wird in einer iterativen Kontrollrechnung die Weite des Verschleifbereiches soweit reduziert, wie es die genannten globalen Maschinenachsengeschwindigkeits- und Maschinenachsenbeschleunigungsgrenze $V_{max}$ und $a_{max}$ und die daraus abgeleiteten Bahngeschwindigkeits-und Bahnbeschleunigungsgrenzen zulassen. Dieser Vorgang wird verdeutlicht anhand des optimierten Überschleifelementes ÜB2, welches nur noch einen kürzeren Verschleifbereich VB2 einnimmt. Je größer dabei der Spielraum zur ermittelten globalen Maschinengeschwindigkeitsgrenze $V_{max}$ und Maschinenachsbeschleunigungsgrenze $a_{max}$ ist, desto kleiner kann der Verschleifbereich VB2 sein, in den das optimierte Überschleifelement ÜB2 eingefügt wird. Ein solches erfindungsgemäßes Vorgehen ermöglicht ein Überschleifen mit maximaler Achsbeschleunigung, was anhand der Figuren 2, 3 und 4 verdeutlicht wird. So wird dadurch erreicht, daß der Geschwindigkeitsverlauf in Basiskoordinaten $V_{Bx}$ erst zu einem späteren Bahnpunkt B2 den Verlauf der konstanten positiven Geshwindigkeit verläßt und linear, nunmehr jedoch mit größerer negativer Steigung als $\ddot{U}BV_{B1}$ verläuft und den Bereich der negativen konstanten Geschwindigkeit bereits zu einem Bahnpunkt B'2 erreicht. Der Geschwindigkeitsverlauf $\ddot{U}BV_{B2}$ kommt dem Idealverlauf von $V_{Bx}$ somit erheblich näher, jedoch ist gewährleistet, daß weder die globale Maschinenachsgeschwindigkeitsgrenze $V_{max}$ noch die globale Maschinenachsbeschleunigungsgrenze $a_{max}$ überschritten werden.

Auf den Verlauf der Geschwindigkeit in Maschinenachskoordinaten wirkt sich dies derart aus, daß ein solcher optimierter Geschwindigkeitsverlauf $\ddot{U}BV_{M2}$ mit seinem Maximum zum Bahnpunkt $\underline{B}_K$ exakt die globale Maschinenachsgeschwindigkeitsgrenze $V_{max}$ erreicht, jedoch nicht darüber hinausgeht, mithin die technologisch größtmögliche Achsgeschwindigkeit ausnutzt. Der Verlauf von $\ddot{U}BV_{M2}$ beschreibt ebenfalls eine Glockenkurve, welche jedoch im Vergleich zu $\ddot{U}BV_{M1}$ schmaler und steiler zwischen den Bahnpunkten $\underline{B}2$ und $\underline{B}'2$ verläuft. Die daran angelehnten Änderungen im Beschleunigungsverlauf in Maschinenachskoordinaten $\ddot{U}Ba_{M2}$ stellen sich ähnlich dar, indem die Beschleunigung erst zu einem Bahnpunkt $\overline{B}2$ den Wert 0 verläßt und mit im Vergleich zu $\ddot{U}Ba_{M1}$ größerer Steigung bis zum Erreichen der globalen Maschinenachsbeschleunigungsgrenze $a_{max}$ nach Art des Maximums eines Sinus verläuft, anschließend linear abfällt, die Bahnachse mit dem Beschleunigungswert 0 im Bahnpunkt des Auftretens des Knickes $\overline{B}_K$ schneidet und linear bis zum Erreichen der negativen globalen Maschinenachsbeschleunigungsgrenze nach Art eines sinusförmigen Minimums im negativen Beschleunigungsbereich führt, um von dort schon zum Bahnpunkt $\underline{B}'2$ wieder linear auf eine Beschleunigung von 0 anzusteigen. Anhand dieses Verlaufes zur Beschleunigung $\ddot{U}Ba_{M2}$ in Maschi-

nenachskoordinaten wird verdeutlicht, daß der Überschreifvorgang somit gemäß der vorliegenden Erfindung mit maximaler Achsbeschleunigung erfolgt. Eine solche erfindungsgemäße Vorgehensweise hat somit den Vorteil, daß das Überschleifelement ÜB2 im Vergleich zum ersten Überschleifelement ÜB1 nicht nur die Beschleunigungsmöglichkeiten und damit die Leistungsfähigkeit des elektrischen Antriebes optimal ausnutzt, sondern auch die zu beschreibende Kontur exakter eingehalten wird, ohne daß die eingangs dargestellten Achsgeschwindigkeitssprünge und Beschleunigungsimpulse einer Werkzeugführung ohne Überschleifen von nicht-tangentialen Satzübergängen mit der dadurch bedingten starken Belastung von Getriebe und Maschine auftreten.

Es sei an dieser Stelle darauf hingewiesen, daß nicht notwendigerweise sowohl die ermittelte globale Maschinenachsgeschwindigkeitsgrenze $V_{max}$ und die ermittelte globale Maschinenachsbeschleunigungsgrenze $a_{max}$ gleichzeitig erreicht werden, sowie dies in den Figuren 3 und 4 dargestellt ist. Es genügt das Erreichen einer der beiden genannten Obergrenzen, um den kürzest möglichen Verschleifbereich VB2 zu ermitteln. Ein nicht-tangentialer Satzübergang wird somit im kürzestmöglichen Verschleifbereich VB2 durch ein darauf angepaßtes optimiertes Überschleifelement ÜB2 ersetzt.

Wenn die Maschinenachsen große Wege im Überschleifelement zurücklegen, beispielsweise in der Nähe singulärer Bereiche, so wird in einer Kontrollrechnung die Weite des zulässigen Verschleifbereiches VB2 zusätzlich reduziert. Um ein dadurch bedingtes Überschreiten der maximalen Achsbeschleunigung und dadurch bedingte unzulässige Achsgeschwindigkeitssprünge und Beschleunigungsimpulse zu vermeiden, wird eine globale Geschwindigkeitsabsenkung durchgeführt. Dabei wird die Geschwindigkeit, welche jeweils im konstanten Verlauf von $V_{Bx}$ als auch von $V_{Mx}$ in den Figuren 2 und 3 dargestellt ist, in allen Dimensionen soweit verringert, bis aufgrund dieser Maßnahme wieder gewährleistet ist, daß die globalen Maschinenachsbeschleunigungs- und Maschinenachsgeschwindigkeitsgrenzen nicht überschritten werden. Gleiches gilt für den Fall, daß bereits beim Einsatz des ersten Überschleifelements ÜB1 im Standardverschleifbereich VB1 die globalen Maschinenachsbeschleunigungs- und Maschinenachsgeschwindigkeitsgrenzen überschritten werden.

Das Verfahren gemäß der vorliegenden Erfindung ist unabhängig von der Maschinenkinematik, da die Approximation des Profilspektrums lediglich in Form einer Grobinterpolation durchgeführt wird. Daneben berücksichtigt das vorliegende Verfahren neben der Transformation auch Maßnahmen zur Werkzeuglängenund Werkzeugradiuskorrektur und läßt sich mit einem beliebigen Interpolationsverfahren zur Feininterpolation der zu überschleifenden Sätze durchführen.

**Patentansprüche**

1. Verfahren zum Verschleifen nicht-tangentialer Bereiche in programmierten Konturen zum Einsatz in numerisch gesteuerten Werkzeugmaschinen und Robotern oder dergleichen, wobei

   1.1 für nicht-tangentiale Satzübergänge jeweils an dessen Stelle ein Überschleifelement (ÜB1) eingefügt wird,

   1.2 in einem solchen Überschleifelement (ÜB1) die Achsverläufe im Basiskoordinatensystem (Bx,By) mit Hilfe eines Polynoms, insbesondere quadratischer, kubischer oder quintischer Ordnung, in einem Standardverschleifbereich (VB1) weich geführt werden,

   1.3 der Verlauf der Maschinenachsen ($V_M,a_M$) innerhalb des Überschleifelementes (ÜB1) vor der Interpolation bestimmt wird,

   **dadurch gekennzeichnet**, daß

   der Verlauf der Maschinenachsen ($V_M,a_M$) approximativ bestimmt wird und

   1.4 anhand der globalen Maschinenachsgeschwindigkeitsgrenzen ($V_{max}$) und Maschinenachsbeschleunigungsgrenzen ($a_{max}$, $-a_{max}$) die maximal mögliche Bahngeschwindigkeitsgrenze und Bahnbeschleunigungsgrenze abgeleitet wird,

   1.5 damit das Überschleifen über die Kontur (K) mit maximaler Achsbeschleunigung ($a_{max}$) erfolgt, die Weite des Verschleifbereiches (VB1) für ein optimiertes Überschleifelement (ÜB2) iterativ so weit reduziert (VB2) wird, wie es die bestimmte maximale Bahngeschwindigkeitsgrenze und Bahnbeschleunigungsgrenze zulassen,

   1.6 wenn eine Reduzierung des Standardverschleifbereiches (VB1) nicht möglich ist, da bereits die Bahngeschwindigkeitsgrenze und/oder die Bahnbeschleunigungsgrenze überschritten wird, zum Ausgleich eine ausreichende Geschwindigkeitsabsenkung vorgenommen wird.

2. Verfahren nach Anspruch 1, **gekennzeichnet** durch folgende Merkmale:

   2.1 für die Approximation der tatsächlich auftretenden Geschwindigkeitsverläufe der Maschinenachsen ($V_M,a_M$) im Überschleifbereich (ÜB1) wird die zu beschreibende Kontur (K) anhand der Steuerungsdaten abgetastet und die Abtastpunkte werden über Polynome beliebiger Ordnung, insbesondere jedoch kubische Polynome, zu einem approximierten Profilspektrum verbunden,

2.2 aus den Polynomen werden in Abhängigkeit von den sich daraus ergebenden Kennwerten die auftretende Achsgeschwindigkeitsbelastung ($V_M$) und Achsbeschleunigungsbelastung ($a_M$) zur Bestimmung von Bahngeschwindigkeitsgrenze und Bahnbeschleunigungsgrenze abgeleitet.

**3.** Verfahren nach Anspruch 1, **gekennzeichnet** durch folgende Merkmale:

3.1 die Maschinenachswerte werden lediglich gemäß einer Grobinterpolation ermittelt, so daß das Verfahren unabhängig von der jeweiligen Maschinenkinematik ist,

3.2 legen die Maschinenachsen weite Wege im Verschleifbereich (VB1, VB2) zurück, so wird der Verschleifbereich zusätzlich reduziert und durch eine ausreichende Geschwindigkeitsabsenkung eine Überlastung der Antriebe vermieden.

## Claims

**1.** Method for grinding off non-tangential regions in programmed contours for use in numerically controlled machine tools and robots or the like, wherein

1.1 for non-tangential block transitions an element for trueing by grinding (ÜB1) is inserted at the respective location thereof;
1.2 in such a trueing element (ÜB1) the axis characteristics in the system of base coordinates (Bx, By) are directed in a compliant manner with the aid of a polynomial, in particular of the second, third or fifth degree, in a standard grinding region (VB1),
1.3 the characteristic of the machine axes ($v_M$, $a_M$) within the trueing element (ÜB1) is determined before the interpolation,

characterised in that
the characteristic of the machine axes ($V_M$, $a_M$) is determined in an approximate manner and

1.4 the maximum limit of velocity along the path and limit of acceleration along the path possible are derived with the aid of the global machine axis velocity limits ($V_{max}$) and machine axis acceleration limits ($a_{max}$, $-a_{max}$),
1.5 in order for the trueing by grinding to be effected over the contour (K) with maximum axial acceleration ($a_{max}$), the width of the grinding region (VB1) is reduced (VB2) in an iterative manner for an optimized trueing element (ÜB2) to the extent permitted by the determined maximum limit of velocity along the path and limit of acceleration along the path,
1.6 if it is not possible to reduce the standard grinding region (VB1), because the limit of velocity along the path and/or the limit of acceleration along the path have/has already been exceeded, the velocity is lowered to a sufficient extent for the purposes of compensation.

**2.** Method according to claim 1, characterised by the following features:

2.1 for the approximation of the velocity characteristics of the machine axes ($V_M$, $a_M$) which actually occur in the trueing region (ÜB1), the contour (K) to be described is scanned with the aid of the control data and the points of scanning are linked by way of polynomials of any degree, in particular, however, cubic polynomials, to give an approximate profile spectrum,
2.2 the axial velocity loading ($V_M$) and axial acceleration loading ($a_M$), which occur, are derived, for the purpose of determining the limit of velocity along the path and the limit of acceleration along the path, from the polynomials as a function of the characteristic values which result therefrom.

**3.** Method according to claim 1, characterised by the following features:

3.1 the machine axis values are merely established in accordance with a rough interpolation so that the method is not dependent upon the respective machine kinematics,
3.2 if the machine axes cover wide paths in the grinding region (VB1, VB2), the grinding region is additionally reduced and by lowering the velocity to a sufficient extent overloading of the drives is avoided.

## Revendications

**1.** Procédé de rectification de zones non tangentielles dans des contours programmés, destiné à être mis en oeuvre dans des machines-outils et des robots à commande numérique ou similaires, procédé d'après lequel

1.1 pour les transitions de blocs non tangentielles, on insère à l'endroit de chacune de celles-ci, un élément de rectification de raccordement (ÜB1),
1.2 dans un tel élément de rectification de raccordement (ÜB1), les lois de variation des axes dans le système de coordonnées de base (Bx, By) sont générées de manière adoucie dans une zone de rectification standard (VB1) à l'aide d'un polynôme, notamment du second, du troisième ou du cinquième degré,

1.3 la loi de variation des axes de machine ($V_M$, $a_M$) à l'intérieur de l'élément de rectification de raccordement (ÜB1) est déterminée avant l'interpolation,

caractérisé en ce que la loi de variation des axes de machine est déterminée de manière approximative, et

1.4 à partir des limites globales de la vitesse d'axe de machine ($V_{max}$) et des limites globales d'accélération d'axe de machine ($a_{max}$, $-a_{max}$), on dérive la limite de la vitesse de trajectoire maximale possible et la limite d'accélération de trajectoire maximale possible,

1.5 pour que la rectification de raccordement sur le contour (K) soit effectuée avec une accélération d'axe maximale ($a_{max}$), la largeur de la zone de rectification (VB1) pour un élément de rectification de raccordement (ÜB2) optimisé est réduite (VB2) itérativement autant que le permettent la limite de la vitesse de trajectoire et la limite de l'accélération de trajectoire maximales déterminées,

1.6 lorsqu'une réduction de la zone de rectification standard (VB1) n'est pas possible parce que la limite de vitesse de trajectoire et/ou la limite d'accélération de trajectoire sont déjà dépassées, on effectue une réduction suffisante de vitesse pour la compensation.

2. Procédé selon la revendication 1, caractérisé par les particularités suivantes:

2.1 pour l'approximation des lois de variation de la vitesse des axes de machines ($V_M$, $a_M$) dans la zone de rectification de raccordement (ÜB1), on balaye le contour (K) à l'aide des données de commande et les points de balayage sont reliés, par l'intermédiaire de polynômes d'un degré quelconque, notamment toutefois des polynômes du troisième degré, en un spectre de profil d'approximation,

2.2 à partir des polynômes on dérive en fonction des valeurs caractéristiques qui en résultent, la sollicitation de vitesse d'axe ($V_M$) et la sollicitation d'accélération d'axe ($a_M$) pour la détermination de la limite de vitesse de trajectoire et de la limite d'accélération de trajectoire.

3. Procédé selon la revendication 1, caractérisé par les particularités suivantes:

3.1 les valeurs d'axe de machine sont déterminées selon une interpolation grossière, de sorte que le procédé est indépendant de la cinématique de la machine considérée,

3.2 si les axes de machine couvrent des déplacements importants dans la zone de rectification (VB1, VB2), la zone de rectification est réduite davantage et l'on évite une surcharge des entraînements par une réduction suffisante de vitesse.

FIG 1

FIG 2

$V_M$

$V_{MAX}$ ‑‑‑ $\ddot{U}BV_{M2}$

$\ddot{U}BV_{M1}$

$V_{Mx}$

0

$\underline{B1}$ $\underline{B2}$ $\underline{B_K}$ $\underline{B2'}$ $\underline{B1'}$ $\underline{B}$

FIG 3

$a_M$ ∞

$a_{max}$

$\ddot{U}Ba_{M2}$

$\overline{B'2}$ $\overline{B'1}$ $a_{Mx}$ $\overline{B}$

0

$\overline{B1}$ $\overline{B2}$

$\ddot{U}Ba_{M1}$

$^-a_{max}$

FIG 4

$- ∞$